Europäisches Patentamt

European Patent Office

Office européen des brevets

(11) Publication number: **0 301 621**
**A1**

# EUROPEAN PATENT APPLICATION

(21) Application number: 88201415.2

(22) Date of filing: 07.07.88

(51) Int. Cl.4: **C08J 5/18 , B29D 7/01 ,
B29C 71/02**

(30) Priority: 23.07.87 DE 3724439

(43) Date of publication of application:
01.02.89 Bulletin 89/05

(84) Designated Contracting States:
AT BE CH DE ES FR GB IT LI NL SE

(71) Applicant: **STAMICARBON B.V.**
**Mijnweg 1**
**NL-6167 AC Geleen(NL)**

(72) Inventor: **Pluyter, Peter Boudewijn**
**Dagobertstraat 100**
**NL-6132 ER Sittard(NL)**
Inventor: **Satijn, Antonius Maria Joseph**
**Hokkelenbergstraat 29A**
**NL-6444 AE Brunssum(NL)**

(54) **Polymer Films of high interlaminar strength, produced by biaxial ultrastretching, process for the production thereof, and the use thereof.**

(57) The invention relates to non-porous and porous polymer films of high interlaminar strength, which are produced by biaxial ultrastretching and are obtainable by subjecting them to a heat treatment after stretching. Due to their low tendency to delamination in the film plane, these films are especially suitable, in the case of non-porous films, for the production of adhesive tapes and magnetic recording materials, and, in the case of porous films, for the production of filter materials, battery separators and medical implantation materials.

EP 0 301 621 A1

## POLYMER FILMS OF HIGH INTERLAMINAR STRENGTH, PRODUCED BY BIAXIAL ULTRASTRETCHING, PROCESS FOR THE PRODUCTION THEREOF, AND THE USE THEREOF

The invention relates to non-porous or porous polymer films of high interlaminar strength. produced by biaxial ultrastretching, to a process for the production thereof and to their use.

Ultrastretched polymer films, that is to say films which have been produced with stretching ratios of more than 5 x 5, in particular more than 7 x 7, in the two mutually perpendicular directions in particular such films of polyolefins, are known. The maximum stretching ratios of these polymer films can be 15 x 15 and higher.

A disadvantage of these known ultrastretched polymer films is their low interlaminar strength, that is to say their tendency to delaminate in the plane of the film. This problem arises in particular when the films, during their use, for example as adhesive tapes, magnetic recording materials and the like, are taken under tension around deflection devices.

From 'Colloid & Polymer Science', 263, 783 to 790 (1985), it is known to subject uniaxially stretched polyethylene films to a heat treatment, in order to increase their mechanical strength in the stretching direction. However, the strengths of these films perpendicular to the stretching direction are very low, that is to say the film splits under the action of tensile forces in a direction perpendicular to the stretching direction.

It is the object of the invention to provide ultrastretched polymer films which have excellent interlaminar strength and no longer delaminate in the film plane under the action of forces which separate the films in the film plane.

The films according to the invention are distinguished by high interlaminar strength, that is to say they are hardly delaminated even under the action of strong mechanical forces perpendicular to the film plane and are therefore suitable especially as carrier materials for adhesive tapes, magnetic recording materials such as video tapes and the like in the case of non-porous films and for the production of filter materials, battery separators, medical implantation materials and the like in the case of porous films.

In an expedient manner, the heat treatment is carried out at a temperature between the relaxation temperature and the crystalline melting point of the polymer, in particular at a temperature which is between the relaxation temperature and a value defined by the quotient

$$\frac{1 \times \text{relaxation temperature} + 3 \times \text{crystalline melting point}}{4}$$

In the case of simultaneous biaxial stretching, the heat treatment is preferably carried out after the stretching, whereas, in the case of sequential biaxial stretching, the heat treatment is expediently carried out after stretching in one direction and then after stretching in the direction perpendicular thereto or only after the sequential stretchings in both directions.

The polymers, of which the ultrastretched polymer films according to the invention consist, are preferably polyolefins which, in particular, have an ultra high molecular weight, that is to say a molecular weight of more than $4 \times 10^5$ g/mol (weight average molecular weight). Preferably, the polyolefins are linear.

Preferably, the polymer films according to the invention are obtained by stretching and heat treatment of tapes which have been prepared by deformation of a melt or a solution of the polymer or of a polymer swollen in a solvent.

The scope of the invention also covers a process for the production of ultrastretched polymer films by dissolving a polymer in a solvent, melting a polymer or swelling a polymer in a solvent and by deformation to give a tape and simultaneous or sequential biaxial ultrastretching of the tape to give a thin polymer film. This process is characterized in that, in the case of biaxial stretching being carried out simultaneously, the film is heat-treated after this stretching or, in the case of stretching being carried out sequentially, the film is heat-treated after stretching in one direction and then after stretching in the direction perpendicular thereto or only after both stretchings.

As already mentioned, the heat treatment in this process is preferably carried out at a temperature between the relaxation temperature and the crystalline melting point of the polymer and especially at a temperature which is between the relaxation temperture and a value defined by the quotient given above.

Preferably, the stretching is carried out at a rate of 1% to 1000% per second.

The heat treatment is preferably carried out for a period of 5 seconds to 40 minutes and especially for a period of 10 seconds to 30 minutes.

The invention also relates to the use of the ultrastretched non-porous polymer films for the production of adhesive tapes or magnetic recording materials, and to the use of porous films for the production of filter materials, battery separators and medical implantation materials.

The polymers from which the biaxially ultrastretched films according to the invention are produced consist especially of polyolefins, which are preferably linear and have ultrahigh molecular weights of more than $4 \times 10^5$ to $6 \times 10^6$ g/mol and higher (weight average molecular weight).

In a particularly preferred manner, polyethylenes are used according to the invention, which can contain minor quantities, preferably at most 5 mol per cent of one or more other alkenes copolymerizable therewith, such as propylene, butylene, pentene, hexene, 4-methylpentene, octene and the like. Preferably, the polyethylene contains 1 to 10, especially 2 to 6, methyl or ethyl groups per 1000 carbon atoms. However, other polyolefins can also be used, such as propylene homopolymers and copolymers. Moreover, the polyolefines used can also contain minor quantities of one or more other polymers, in particular alkene-1 polymers.

The polymers used can contain conventional additives, such as fillers, stabilizers against degradation by ultraviolet radiation or ozone, flameproofing agents, crystallization agents, agents which increase the abrasive strength, anti-blocking agents, lubricants such as calcium stearate, and the like.

The invention is explained below in more detail by reference to polyethylene of ultra high molecular weight, but it is equally applicable also to other polymers.

For the production of ultrastretched polyethylene films according to the invention, a tape is formed first from a melt of the polyethylene or from a finely divided polyethylene swollen in a solvent or, with particular preference, from a solution of a polyolefin in a suitable solvent. The solvents used here for dissolving polyethylenes of ultra high molecular weight are known halogenated and non-halogenated hydrocarbons, in particular aliphatic, cycloaliphatic and aromatic hydrocarbons having boiling points of at least 100¤C, such as paraffins, toluene, xylenes, tetralin, decalin, $C_9$-$C_{12}$-alkanes or petroleum fractions. It is also possible, however, to use solvents which are solid at room temperature but are liquid at the dissolution temperature, such as paraffin waxes. The polyolefin is advantageously dissolved in these hydrocarbons in quantities of between 1 and 80% by weight, especially between 10 and 50% by weight. Preferably, the dissolution is carried out at a temperature between 160 and 200¤C, decalin being employed as a particularly preferred solvent. The dissolution temperature depends of course on the particular olefin used, on the solvent used, on the quantity to be dissolved and on the equipment used for the dissolution. In an expedient manner, the dissolution is carried out in an extruder, in particular in a twin-screw extruder which is fed with a suspension of the polyolefin, which is to be dissolved, in the particular solvent, one or more statix mixers preferably also being arranged downstream of the extruder. The residence time in the extruder is advantageously between 1 and 25 minutes, in particular between 3 and 15 minutes. Assisted by the kneading action in the extruder and in the static mixers which may have been arranged downstream, the polyolefin dissolves. The solution is then expediently extruded through a shaping die which preferably has a width of between 60 mm and 700 mm and a height between 100 μm and 10 mm, a tape being formed which is rapidly cooled to a temperature below the dissolution temperature of the polyolefin, a gel being formed. The cooling can be effected by introducing the tape into a cooling bath, by blowing with a cooling gas or by the use of cooling rolls. When a cooling bath is used, the coolant is preferably water, but the coolant used can also be the solvent employed for dissolving the polymer or an agent which extracts the solvent. Preferably, the temperature of the cooling bath is 5 to 30¤C.

The gel tape obtained is then biaxially stretched either simultaneously or sequentially with removal of the solvent, the heat treatment being carried out, in the case of simultaneous biaxial stretching after the latter. In the case of biaxial stretching carried out sequentially, a heat treatment is carried out after the first stretching and then a further heat treatment is carried out after the stretching in the direction perpendicular to the first stretching direction, but in this case the heat treatment can also be carried out after the two stretchings.

In the case of polyethylene of ultra high molecular weight, the heat treatment is preferably carried out at a temperature between 90 and 135¤C and in particular 90 and 115¤C.

During the heat treatment, the polyethylene film should be solvent-free as far as possible, whereas the gel tape can still contain solvent during the ultrastretching which is carried out especially at a rate of 10 to 20% per second.

The heat treatment can be carried out in the relaxed state of the polyethylene film, but it can also be carried out while the film is held in the machine direction and/or in the transverse direction under tension in a tenter frame, which tension depends on the heat treatment temperature and time, on the film thickness

3

EP 0 301 621 A1

and on the type of production and stretching of the film.

During the drying of the gel tapes, the latter can be allowed to shrink to a limited extent in one or both directions, for example by 1 to 30% and preferably 5 to 15%.

The examples which follow explain the invention.

## Example 1 (comparative example)

A polyethylene with an ultrahigh molecular weight of about $1.5 \times 10^6$ g/mol (Hostalen GUR 412®) is dissolved in a quantity of 15% by weight in decalin in a twin-screw extruder with two downstream static mixers with the addition of 1% by weight of Topanol® and Irgafos® (stabilizers) during a residence time of 8 minutes and the solution is deformed at a temperature of 190¤C by means of a shaping die having dimensions of 250 x 5 mm to give a tape which is then cooled by introducing it into a cooling bath of water at a temperature of 15¤C and dried.

Two samples of this tape are stretched,

A) uniaxially at a stretching ratio of 10 at 130¤ in one direction and

B) at a stretching ratio of 30 at 130¤C likewise in one direction.

The susceptibility to delamination perpendicular to the stretching direction is then established by determining the Young's modulus perpendicular to the stretching direction by ASTM method D 882, using the tensile strength tester described therein. The samples to be tested are stretched at a rate of 15 mm per minute at a clamp distance of 20 mm. The values of the Young's modulus are shown in Table I which follows.

Using specimens of dimensions 50 x 50 mm, a tear test is then carried out by the same method, a slit of 5 mm width being made by means of a knife in sample a) in the middle of the film, whereas sample b) was tested without such a slit. In this case, the clamp distance was 25 mm and the stretching rate was 25 mm per minute. The values of the maximum tear strength ($\sigma_{max}$) are also shown in the table which follows, like the Young's moduli in MPa.

Samples of the films stretched according to A) and B) are then heat-treated at 95¤C for 20 minutes, a shrinkage of 5% being allowed. Using ten samples, the average values are determined which are compiled in the table which follows.

The results of this table show that no improvement in the lateral strength is achieved.

TABLE I

| $\lambda = 10$ | before heat treatment | after heat treatment |
|---|---|---|
| Young's modulus $\perp$, MPa<br>Tear test a), MPa<br>Tear test b), MPa | 110<br>6.9 (± 0.3)<br>8.4 (± 0.3) | 118<br>7.0 (± 0.4)<br>8.4 (± 0.2) |
| $\lambda = 30$ | before heat treatment | after heat treatment |
| Young's modulus $\perp$, MPa<br>Tear test a), MPa<br>Tear test b), MPa | not measurable, due to delamination<br>not measurable, due to delamination<br>2.3 (± 0.6) | not measurable, due to delamination<br>not measurable, due to delamination<br>2.1 (± 0.5) |

## Example 2

Films are prepared in the manner described in Example 1, the gel tapes being allowed to shrink by 15% during drying, and biaxial stretching being carried out in a tenter frame at 130¤C at an initial stretching rate of 20% per second and at a stretching ratio of 4 x 4.

The heat treatment of the samples stretched in this way is carried out in the manner described in Example 1, the heat treatment times being shown in Table II which follows. Eight samples in total are examined. The interlaminar strength is determined by two test methods, namely by the separation test according to DIN 53530 and according to ISO test 6383, the separating rate being 20 mm per second in each case. The values thus obtained are shown in Table II.

4

TABLE II

| No. of sample | Heat treatment time, minutes | Interlaminar strength | |
|---|---|---|---|
| | | Separation test DIN 53530, N/m | ISO test 6383, N/m |
| 1 | 0 | 20 | 30 |
| 2 | 0 | 22 | 28 |
| 3 | 10 · | 19 | 34 |
| 4 | 10 | 21 | 33 |
| 5 | 20 | 22 | 29 |
| 6 | 20 | 21 | 31 |
| 7 | 60 | 24 | 33 |
| 8 | 90 | 23 | 33 |

Example 3

The procedure followed is as described in Example 2, with the exception that simultaneous biaxial stretching at a stretching ratio of 8 x 8 is carried out.

The results are shown in Table III which follows.

TABLE III

| No. of sample | Heat treatment time, minutes | Interlaminar strength | |
|---|---|---|---|
| | | Separation test DIN 53530, N/m | ISO test 6383, N/m |
| 9 | 0 | 10 | 22 |
| 10 | 0 | 9 | 19 |
| 11 | 5 | 14 | 31 |
| 12 | 10 | 19 | 29 |
| 13 | 10 | 22 | 32 |
| 13 | 20 | 26 | 40 |
| 14 | 20 | 26 | 40 |
| 15 | 20 | 22 | 45 |
| 16 | 30 | 40 | 60 |
| 17 | 60 | 29 | 63 |

Example 4

This example corresponds to Example 3 with the exception that the biaxial stretching is carried out sequentially at a stretching ratio of 8 x 8, first in the machine direction and then in the transverse direction.

Similar results as in the case of Example 3 are obtained.

**Claims**

1. Polymer films of high interlaminar strength, produced by biaxial ultrastretching, characterized in that they have been subjected to a heat treatment.

2. Polymer films according to Claim 1, characterized in that the heat treatment has been carried out at a temperature between the relaxation temperature and the crystalline melting point of the polymer.

3. Films according to Claim 2, characterized in that the heat treatment has been carried out at a temperature which is between the relaxation temperature and a value defined by the quotient

$$\frac{1 \times relaxation\ temperature + 3 \times crystalline\ melting\ point}{4}.$$

4. Films according to Claims 1 to 3, characterized in that, in the case of simultaneous biaxial stretching, the heat treatment has been carried out after the stretching.

5. Films according to Claims 1 to 3, characterized in that, in the case of sequential biaxial stretching, the heat treatment has been carried out after stretching in one direction and then after stretching in the direction perpendicular thereto or only after sequential stretchings in both directions.

6. Films according to Claims 1 to 5, characterized in that they consist of polyolefins.

7. Films according to Claims 1 to 6, characterized in that the polyolefins have an ultra high molecular weight of more than 400,000 g/mol (weight average).

8. Films according to Claims 1 to 7, characterized in that the polyolefins are linear.

9. Films according to Claims 1 to 8, characterized in that they are obtainable by stretching and heat treatment of tapes which have been prepared by deformation of a melt or a solution of the polymer or of a polymer swollen in a solvent.

10. Process for producing polymer films according to Claims 1 to 9 by dissolving a polymer in a solvent, melting a polymer or incipiently swelling a polymer in a solvent and by deformation to give a tape and simultaneous or sequential biaxial ultrastretching of the tape to give a thin polymer film, characterized in that, in the case of biaxial stretching being carried out simultaneously, the film is heat-treated after stretching in one direction and then after stretching in the direction perpendicular thereto or only after both stretchings.

11. Process according to Claim 10, characterized in that the heat treatment is carried out at a temperature between the relaxation temperature and the crystalline melting point of the polymer.

12. Process according to Claim 11, characterized in that the heat treatment is carried out at a temperature which is between the relaxation temperature and the value defined by the quotient

$$\frac{1 \times relaxation\ temperature + 3 \times crystalline\ melting\ point}{4}.$$

13. Process according to Claims 10 to 12, characterized in that the stretching is carried out at a rate of 1% to 1000% per second.

14. Process according to Claims 10 to 13, characterized in that the heat treatment is carried out for a period of 5 seconds, preferably 10 seconds, to 40 minutes and especially 20 seconds to 30 minutes.

15. Use of non-porous polymer films according to Claims 1 to 14 for the production of adhesive tapes or magnetic recording materials.

16. Use of porous polymer films according to Claims 1 to 14 for the production of filter materials, battery separators and medical implantation materials.

# EUROPEAN SEARCH REPORT

European Patent Office

. Application number

## DOCUMENTS CONSIDERED TO BE RELEVANT

EP 88201415.2

| Category | Citation of document with indication, where appropriate, of relevant passages | Relevant to claim | CLASSIFICATION OF THE APPLICATION (Int. Cl.4) |
|---|---|---|---|
| X | <u>EP - A2 - 0 163 424</u> (TOA NENRYO KOGYO KABUSHIKI KAISHA)<br><br>Claims; example 1; page 6, lines 7-27; page 7, lines 31-36 *<br><br>-- | 1,2,4-7,9-11,13-16 | C 08 J 5/18<br>B 29 D 7/01<br>B 29 C 71/02 |
| X | <u>EP - B1 - 0 023 776</u> (IMPERIAL CHEMICAL INDUSTRIES PLC)<br><br>* Claims; page 3, lines 34-37; examples 1-4 *<br><br>-- | 1,2,4-6 | |
| X | DERWENT ABSTRACT No. 85-313184 (WPIL)<br><br>TELESYSTEMES QUESTEL, Paris<br><br>* Abstract *<br><br>& JP-A-60-217 133 (TORAY IND. INC.) 30-10-1985<br><br>-- | 1,2,4-6,9-11 | |
| X | DERWENT ABSTRACT No. 83-47766K (WPIL)<br><br>TELESYSTEMES QUESTEL, Paris<br><br>* Abstract *<br><br>& JP-A-58-059 072 (ASAHI CHEMICAL IND. KK.) 07-04-1983<br><br>---- | 1,2,4,5 | |

| | TECHNICAL FIELDS SEARCHED (Int. Cl.4) |
|---|---|
| | C 08 J<br>B 29 D<br>B 29 C |

The present search report has been drawn up for all claims

| Place of search | Date of completion of the search | Examiner |
|---|---|---|
| VIENNA | 08-11-1988 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82